Europäisches Patentamt

European Patent Office

Office européen des brevets

(19)

(11) **EP 1 017 976 B1**

(12) **EUROPÄISCHE PATENTSCHRIFT**

(45) Veröffentlichungstag und Bekanntmachung des Hinweises auf die Patenterteilung:
**21.11.2001  Patentblatt 2001/47**

(51) Int Cl.⁷: $G01L\ 21/12$

(21) Anmeldenummer: **98939464.8**

(22) Anmeldetag: **01.09.1998**

(86) Internationale Anmeldenummer:
**PCT/CH98/00375**

(87) Internationale Veröffentlichungsnummer:
**WO 99/15869 (01.04.1999 Gazette 1999/13)**

(54) **VERFAHREN ZUR MESSUNG DES GASDRUCKS IN EINEM GEFÄSS SOWIE VORRICHTUNGEN ZUR DURCHFÜHRUNG DES VERFAHRENS**

METHOD FOR MEASURING THE GAS PRESSURE IN A CONTAINER, AND DEVICES FOR ITS APPLICATION

PROCEDE POUR MESURER LA PRESSION DU GAZ DANS UN RECIPIENT, ET DISPOSITIFS POUR SA MISE EN OEUVRE

(84) Benannte Vertragsstaaten:
**DE DK FR GB IT**

(30) Priorität: **22.09.1997  CH 221697**

(43) Veröffentlichungstag der Anmeldung:
**12.07.2000  Patentblatt 2000/28**

(73) Patentinhaber: **Unaxis Balzers Aktiengesellschaft**
**9496 Balzers (LI)**

(72) Erfinder:
 • **ROLFF, Norbert**
  **D-50169 Horrem (DE)**
 • **STOCKER, Rudolf**
  **CH-9478 Azmoos (CH)**

(74) Vertreter:
**Wagner, Wolfgang, Dr. Phil., Dipl.-Phys. et al c/o Zimmerli, Wagner & Partner AG Löwenstrasse 19 8001 Zürich (CH)**

(56) Entgegenhaltungen:
**DE-A- 1 947 211          DE-A- 4 308 434 DE-B- 1 029 599**

 • **G.T. RAYFIELD E.A.: "MICROMINIATURE PIRANI GAUGE FOR MEASUREMENTS OF LOW PRESSURES" REVIEW OF SCIENTIFIC INSTRUMENTS., Bd. 36, Nr. 10, Oktober 1968, Seiten 1438-1440, XP002064594 NEW YORK US**

## Beschreibung

Die Erfindung betrifft ein Verfahren gemäss dem Oberbegriff des Anspruchs 1 sowie Vorrichtungen zur Durchführung des Verfahrens gemäss dem Oberbegriff des Anspruchs 6, 9 oder 10.

Es ist seit langem bekannt, den Druck in einem Gefäss nach der Pirani-Methode zu messen, indem die an einem Widerstandselement, z. B. einem Messdraht anfallende elektrische Leistung erfasst wird, aus der sich der Wärmeübergang vom Widerstandselement zur Gefässwand ergibt. Unter Benutzung des bekannten Zusammenhangs zwischen Druck und Wärmeleitfähigkeit des Gases lässt sich schliesslich aus dem Wärmeübergang zwischen Widerstandselement und Gefässwand der gesuchte Gasdruck im Gefäss ermitteln.

Es ist jedoch ebenfalls bekannt, dass bei dieser Messmethode verschiedene Störeinflüsse auftreten, die sich schlecht oder nur mit bedeutendem Aufwand ausschalten oder kompensieren lassen. Nicht nur ist die Wärmeleitung durch das Gas von der Wandtemperatur des Gefässes abhängig, der Wärmeübergang zwischen Widerstandselement und Gefässwand enthält auch Anteile, die durch Strahlungsaustausch sowie Wärmeleitung im Bereich der Anschlüsse des Widerstandselements verursacht werden. Beide Anteile sind ebenfalls stark von der Wandtemperatur des Gefässes abhängig, die höchstens mit grossem Aufwand im für eine ausreichend genaue Messung erforderlichen Umfang erfasst werden kann.

Es wurde bereits versucht, die Temperatureinflüsse dadurch zu kompensieren, dass in eine das Widerstandselement enthaltende Wheatstone-Brücke ein temperaturabhängiger Widerstand eingebaut wurde. Es ist jedoch sehr schwierig, auf diese Weise über einen grösseren Druckbereich eine befriedigende Kompensation zu erreichen.

Aus der DE-A-43 08 434 ist es bei einer derartigen Lösung ausserdem bekannt, den Widerstandswert des temperaturabhängigen Widerstands zu erfassen und zu einer zusätzlichen, beispielsweise rechnerischen Temperaturkompensation heranzuziehen. Auch hier ist jedoch die Kompensation des Temperatureinflusses trotz des beträchtlichen Aufwandes nicht unbedingt optimal.

Der Erfindung liegt demgemäss die Aufgabe zugrunde, eine Messmethode anzugeben, bei welcher Störeinflüsse auf durchgreifende und zugleich einfache Weise ausgeschaltet sind und insbesondere der Einfluss der Wandtemperatur auf den für den Gasdruck ermittelten Wert über einen grossen Druckbereich kompensiert ist.

Die Erfindung, wie sie in den Ansprüchen gekennzeichnet ist, schafft ein Verfahren, bei welchem der Gasdruck in von Störungen im wesentlichen unbeeinträchtigter Form auf einfache Weise aus leicht zugänglichen elektrischen Grössen ermittelt wird. Darüberhinaus werden Vorrichtungen angegeben, mittels derer das erfindungsgemässe Verfahren in besonders günstiger Weise ausgeführt werden kann. Die vorgeschlagenen Ausführungsformen erlauben, je nach Anforderungen an die Messgenauigkeit, mittels getrennter Erfassung und digitaler Verarbeitung der elektrischen Grössen eine sehr genaue Bestimmung des Gasdrucks durchzuführen.

Im folgenden wird die Erfindung anhand von Figuren, welche lediglich Ausführungsbeispiele zeigen, näher erläutert. Es zeigen

Fig. 1    das Schaltbild einer erfindungsgemässen Vorrichtung zur Durchführung des erfindungsgemässen Verfahrens gemäss einer ersten Ausführungsform,

Fig. 2    das Schaltbild einer erfindungsgemässen Vorrichtung zur Durchführung des erfindungsgemässen Verfahrens gemäss einer zweiten Ausführungsform,

Fig. 3    das Schaltbild einer erfindungsgemässen Vorrichtung zur Durchführung des erfindungsgemässen Verfahrens gemäss einer dritten Ausführungsform und

Fig. 4    den Verlauf von Kurven konstanten Drucks und konstanter Temperatur in einer Ebene von mittels der Vorrichtung nach Fig. 3 ermittelten Grössen.

Als Grundlage für die Messung des Drucks dient die z. B. aus H. R. Hidber, G. Süss: 'Pirani manometer with linearized response', Rev. Sci. Instrum. 47/8 (1976), 912-914 bekannte Formel für die durch Wärmeübergang vom Widerstandselement an die Gefässwand abgegebene Leistung als Funktion des Gasdrucks p im Gefäss, der Temperatur T des Widerstandselements und der Wandtemperatur $T_W$:

$$(1) \qquad N(p) = \alpha(\varepsilon T^4 - \varepsilon_W T_W^{\,4}) + \beta(T-T_W)/\sqrt{T_W} \times p + \gamma(T-T_W)$$

Dabei erfasst der erste Term den Wärmeübergang durch Strahlung und der letzte denjenigen durch Wärmeleitung im Bereich der Anschlüsse des Widerstandselements, während der mittlere Term für einen hier vor allem interessierenden Bereich von Drücken unter 1 mbar den durch die druckabhängige Wärmeleitung durch das Gas verursachten Wärmeübergang beschreibt. Bei Verwendung einer etwas komplizierteren Formel für die Abhängigkeit dieses Terms vom Druck, welche auch die Sättigung bei höheren Drücken berücksichtigt, kann das erfindungsgemässe Verfahren jedoch ohne wesentliche Aenderungen auch auf einen wesentlich grösseren Druckbereich angewandt werden.

(1) enthält als schwer eliminierbaren Faktor die Wandtemperatur $T_W$, welche die Messresultate wesentlich beeinflussen kann. Gemäss dem Grundgedanken der Erfindung wird der Einfluss der Wandtemperatur entweder von vornherein unterdrückt, indem die Schaltung so angelegt wird, dass durch den Einfluss der Umgebungstemperatur bewirkte Aenderungen im Widerstand von Widerstandselementen den elektrischen Zustand der Vorrichtung nicht wesentlich beeinflussen oder rechnerisch kompensiert, indem die Temperatur eines Widerstandselementes bei geringer elektrischer Belastung desselben über seinen Widerstand ermittelt wird, wenn sich dasselbe mit der Umgebung in thermischem Gleichgewicht befindet oder auch dadurch, dass zwischen zwei verschiedenen Temperaturen hin- und hergeschaltet und die Abhängigkeit der dabei gewonnenen Messergebnisse von der Umgebungstemperatur heuristisch kompensiert wird.

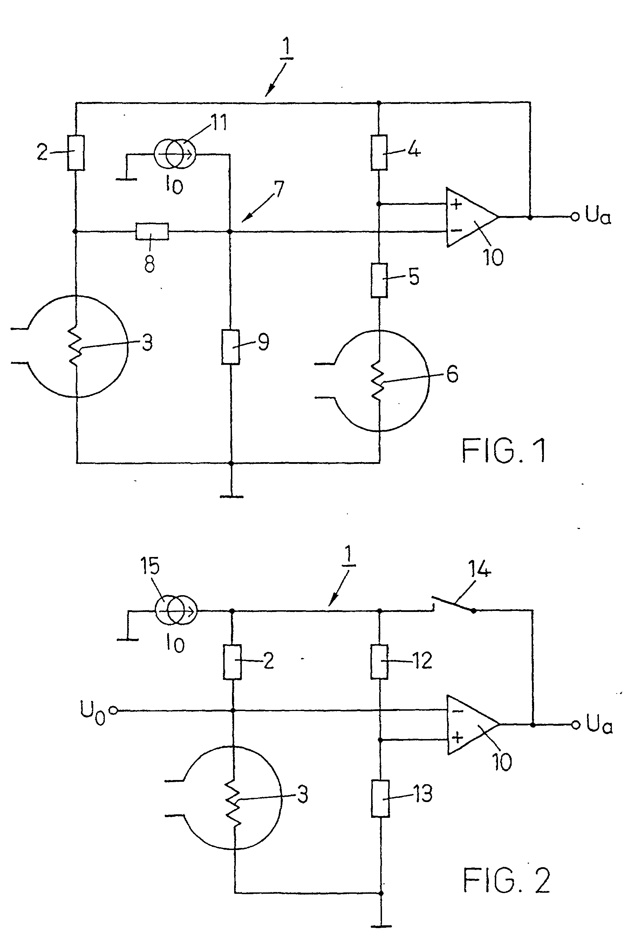

Die Vorrichtung nach Fig. 1 umfasst eine Wheatstone-Brücke 1 mit einem ersten Zweig, der in Serie einen ersten Brückenwiderstand 2 und im zu überwachenden Gefäss ein erstes Widerstandselement 3, vorzugsweise einen Messdraht enthält. In einem dazu parallelen zweiten Zweig liegen ein zweiter Brückenwiderstand 4 und ein Vorwiderstand 5 mit einem zweiten, im gleichen Gefäss vorzugsweise nahe dem ersten Widerstandselement 3 angeordneten zweiten Widerstandselement 6, ebenfalls einem Messdraht, in Reihe.

Zwischen dem ersten Brückenwiderstand 2 und dem ersten Widerstandselement 3 liegt ein Abgriff, der über einen Spannungsteiler 7, bestehend aus hochohmigen Widerständen 8, 9, mit dem invertierenden Eingang eines Operationsverstärkers 10 verbunden ist, während ein zweiter Abgriff zwischen dem zweiten Brückenwiderstand 4 und dem Vorwiderstand 5 mit dessen nichtinvertierendem Eingang verbunden ist. Der Ausgang des Operationsverstärkers 10 speist die Wheatstone-Brücke 1 und liefert zugleich die Ausgangsspannung $U_a$.

Am Ausgang des parallel zum ersten Widerstandselement 3 liegenden Spannungsteilers, zwischen den Widerständen 8 und 9 ist eine Konstantstromquelle 11 angeschlossen, die einen Konstantstrom $I_0$ einspeist. Der Widerstand $R_{P1}$ des ersten Widerstandselements 3 und der Widerstand $R_{P2}$ des zweiten Widerstandselements 6 weisen jeweils einen positiven Temperaturkoeffizienten auf.

Die Wheatstone-Brücke 1 wird durch den Operationsverstärker 10 in abgeglichenem Zustand gehalten. Dabei gilt, wenn die Werte des ersten Brückenwiderstands 2 und des zweiten Brückenwiderstands 4 mit $R_{G1}$, $R_{G2}$, der des Vorwiderstands 5 mit $R_V$ und der Teilungsfaktor des Spannungsteilers 7 mit k bezeichnet werden und man vom Konstantstrom $I_0$ vorerst absieht:

$$(2) \qquad k \times R_{P1} / (R_{P1} + R_{G1}) = (R_V + R_{P2}) / (R_{G2} + R_V + R_{P2})$$

Man kann nun die Widerstände so dimensionieren, dass für einen bestimmten Druck, der vorzugsweise im oberen Teil des Messbereichs liegt und für eine mittlere Wandtemperatur die_ Ableitung des linken Terms in (2) nach der Temperatur $T_1$ des ersten Widerstandselements 3 der des rechten Terms nach der Temperatur $T_2$ des zweiten Widerstandselements 6 entspricht. Da sich bei Aenderung der Wandtemperatur $T_w$ die Temperaturen $T_1$, $T_2$ des ersten Widerstandselements 3 und des zweiten Widerstandselements 6 in gleicher Weise ändern, bleibt daher die Gleichheit der Terme im wesentlichen erhalten. Durch das Einspeisen des Konstantstroms $I_0$ wird der linke Term leicht verschoben, so dass beide Terme bei gleichen Temperaturänderungen an zwei Punkten übereinstimmen und dazwischen sehr nahe beieinander liegen. Eine Nachregelung der Wheatstone-Brücke 1 unterbleibt daher bei gleichen Aenderungen der Temperaturen $T_1$, $T_2$ der Widerstandselemente 3, 6 im genannten Bereich weitgehend, d. h. die Ausgangsspannung $U_a$ ändert sich bei Aenderung der Wandtemperatur $T_w$ praktisch nicht.

Die Dimensionierung kann beispielsweise wie folgt gewählt werden: $R_{G1} = 100\ \Omega$, $R_{G2} = 475\ \Omega$, $R_V = 128\ \Omega$. Die Widerstandselemente 3, 6 können jeweils einen Kaltwiderstand von 87 Ω aufweisen. Die Widerstände 8, 9 des Spannungsteilers 7 sind wie oben erwähnt hochohmig, so dass sie den Strom durch die Wheatstone-Brücke 1 praktisch nicht beeinflussen. Sie können z. B. zu 82,2 kΩ und 100 kΩ gewählt werden. Schliesslich kann der Konstantstrom $I_0$ beispielsweise 1 μA betragen.

Die beiden Zweige der Wheatstone-Brücke 1 sind jedenfalls so eingestellt, dass durch den das erste Widerstandselement 3 enthaltenden Zweig ein verhältnismässig hoher Strom und durch den das zweite Widerstandselement 6 enthaltenden Zweig ein deutlich geringerer Strom fliesst. Die Widerstandselemente 3 und 6 weisen daher auch verschiedene Temperaturen $T_1$, $T_2$ auf. Die durch Aenderungen des Drucks und des dadurch bedingten Wärmeverlusts bewirkten Temperaturänderungen der Widerstände $R_{P1}$, $R_{P2}$ der Widerstandselemente sind daher ebenfalls verschieden und führen zu einer Neuabgleichung der Wheatstone-Brücke 1 durch den Operationsverstärker 10, was sich auch in einer Aenderung der Ausgangsspannung $U_a$ niederschlägt.

Die Auswertung des Ausgangssignals erfolgt im wesentlichen nach einer aufgenommenen Eichkurve, da die rein rechnerische Auswertung wegen des verhältnismässig komplizierten Aufbaus der Vorrichtung nur mit grösserem Aufwand möglich wäre. Es kann auch an ein und demselben Widerstandselement der Widerstand bei verschiedenen Temperaturen erfasst werden, indem die Temperatur z. B. durch periodische Umschaltung eines Widerstands einer das Widerstandselement enthaltenden Wheatstone-Brücke umgestellt wird.

Auf im einzelnen etwas andere Weise geschieht dies bei der Vorrichtung gemäss Fig. 2. Sie umfasst ebenfalls eine Wheatstone-Brücke 1 mit einem ersten Zweig, der in Reihe einen ersten Brückenwiderstand 2 und ein im Gefäss angeordnetes, vorzugsweise als Messdraht ausgebildetes Widerstandselement 3 enthält und einem zweiten Zweig mit einer Reihenschaltung von zwei Grundwiderständen 12, 13. Die Wheatstone-Brücke 1 wird wiederum von einem Operationsverstärker 10 abgeglichen, und zwar über einen Schalter 14, z. B. einen Transistor. Eine Konstantstromquelle 15 speist einen Konstantstrom $I_0$ in die Wheatstone-Brücke 1 ein. Der Brückenwiderstand 2 kann beispielsweise einen Wert von 100 $\Omega$ aufweisen, die Grundwiderstände 12, 13 solche von 10 k$\Omega$ bzw. 14 k$\Omega$, während der Kaltwiderstand des Widerstandselements 3 bei 87 $\Omega$ liegt. Der Konstantstrom $I_0$ kann 100 µA betragen.

Bei geschlossenem Schalter 14 wird die Wheatstone-Brücke 1 durch den Operationsverstärker 10 abgeglichen. Nach thermischer Stabilisierung der Schaltung ergibt sich aus der Ausgangsspannung $U_a$ und den konstanten Widerstandswerten in bekannter Weise der Widerstand $R_P$ am Widerstandselement 3 und aus dem bekannten Zusammenhang zwischen Temperatur und Widerstand $R_P$ auch die Temperatur $T_1$ des Widerstandselements 3, ausserdem der Spannungsabfall über denselben und somit die von ihm durch Strahlung und Wärmeleitung abgegebene druckabhängige Leistung N(p), wobei freilich gemäss (1) die nicht genau bekannte Wandtemperatur $T_W$ diese Grösse beeinflusst.

Durch Oeffnen des Schalters 14 wird nun die Abgleichung der Wheatstone-Brücke 1 ausgesetzt. Nach thermischer Stabilisierung - eventuell kann der Endwert schon vorher aus dem Verlauf des Einschwingvorgangs ermittelt werden - fliesst durch das Widerstandselement 3 ein Anteil des Konstantstroms $I_0$, der vorzugsweise so bemessen ist, dass er denselben nicht nennenswert erwärmt. Aus der über das Widerstandselement 3 abfallenden Spannung $U_0$ und den bekannten Werten der weiteren Widerstände in der Wheatstone-Brücke 1 kann nun wiederum der Widerstand des Widerstandselements 3 ermittelt und seine Temperatur $T_2$ bestimmt werden, die jetzt der Wandtemperatur $T_W$ entspricht. Nach Einsetzen dieses Wertes in (1) kann die Gleichung nach p aufgelöst werden.

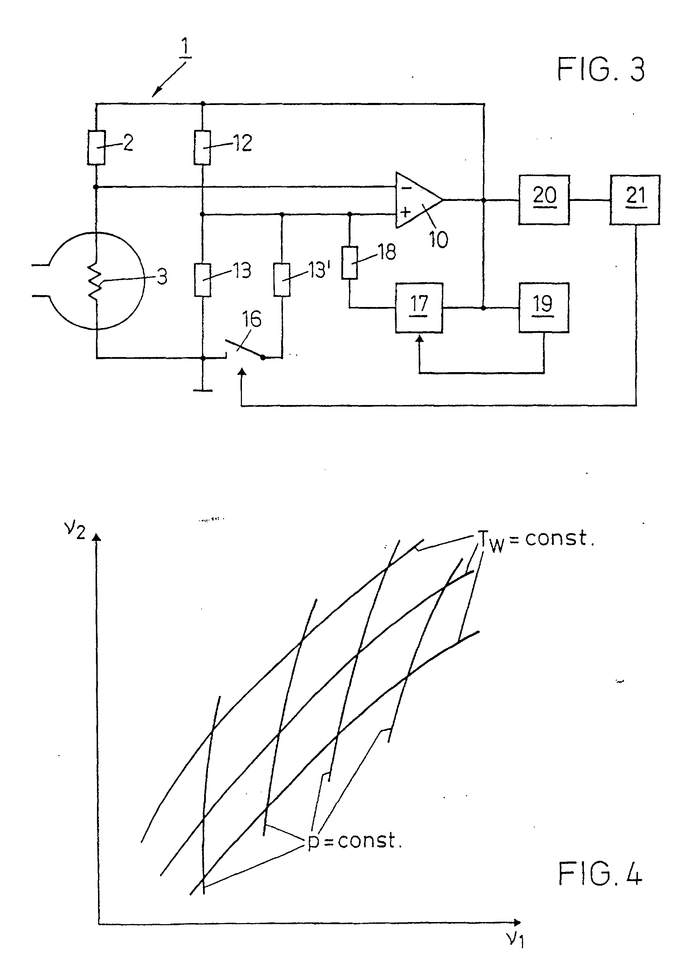

Die Vorrichtung nach Fig. 3 umfasst wiederum eine Wheatstone-Brücke 1 mit einem Brückenwiderstand 2 von z. B. 100 $\Omega$ und einem mit demselben in Reihe geschalteten, im Gefäss angeordneten Widerstandselement 3, vorzugsweise einem Messdraht mit einem Kaltwiderstand von 87 $\Omega$ in einem ersten Zweig und zwei Grundwiderständen 12, 13 von z. B. 10 k$\Omega$ und 14 k$\Omega$ in einem zweiten Zweig, welche von einem Operationsverstärker 10 abgeglichen wird. Zum zweiten Grundwiderstand 13 kann ein Parallelwiderstand 13' von beispielsweise 120 k$\Omega$ mittels eines Schalters 16 parallelgeschaltet werden.

Am Ausgang des Operationsverstärkers 10 sind ein Verstärker 17, der über einen Koppelwiderstand 18 von z. B. 1 M$\Omega$ auf dessen nichtinvertierenden Eingang zurückgeführt ist und parallel dazu ein Amplitudenregler 19 angeschlossen. Ausserdem wird die Ausgangsspannung $U_a$ einem Frequenzmessgerät 20 zugeführt, das sein Messresultat an einen Mikroprozessor 21 weiterleitet. Der Mikroprozessor 21 betätigt auch den Schalter 16.

Wird der Schalter 16 z. B. geöffnet, so wird ein Einschwingvorgang ausgelöst, bei dem sich das Widerstandselement 3 auf eine Temperatur $T_1$ einstellt. Durch die vom Amplitudenregler 19 gesteuerte Rückkopplung der Wheatstone-Brücke 1 über den Verstärker 17 wird die Schwingung um die einem vollständigen Abgleich entsprechende Ruhelage stabilisiert, wobei der Verstärker 17 so gesteuert wird, dass die Amplitude der Schwingung einen festen, verhältnismässig kleinen Wert annimmt. Die Frequenz $\nu_1$ dieser Schwingung, die über die Wärmeleitfähigkeit und die Wärmekapazität des Gases vom Gasdruck p und ausserdem von der Wandtemperatur $T_W$ abhängt, wird vom Frequenzmessgerät 20 erfasst und an den Mikroprozessor 21 weitergeleitet.

Dieser schliesst, z. B. nachdem sich die Vorrichtung und damit die gemessene Frequenz $\nu_1$ vollständig stabilisiert hat, den Schalter 16, was eine Aenderung des Teilungsverhältnisses bewirkt und einen Neuabgleich der Wheatstone-Brücke 1 durch Einstellung des Widerstandselements 3 auf einen tieferen Widerstand und damit eine tiefere Temperatur $T_2$ nach sich zieht. Auch um diese Ruhelage entsteht eine Schwingung, deren Frequenz $\nu_2$ nach Stabilisierung der Vorrichtung vom Frequenzmessgerät 20 erfasst wird und wiederum über die Wärmeleitfähigkeit und die Wärmekapazität des Gases von dessen Druck p und ausserdem von der Wandtemperatur $T_W$ abhängt. Bei einer Wandtemperatur $T_W$ von ca. 25°C ergeben sich bei den oben angeführten Dimensionierungen Frequenzen von der Grössenordnung 50 Hz bei $10^{-3}$ mbar und 2 kHz bei 1 bar.

In der von $\nu_1$ und $\nu_2$ aufgespannten Ebene (s. Fig. 4) entspricht jeder Punkt einem Druck-Temperatur-Paar (p, $T_W$). Die bestimmten Drücken und Wandtemperaturen entsprechenden Werte von $\nu_1$, $\nu_2$ können durch Eichmessungen bestimmt und in einem Speicher tabellarisch abgelegt werden. Umgekehrt kann der Mikroprozessor 21 aus einem Frequenzpaar ($\nu_1$, $\nu_2$) durch Interpolation aus den nächstliegenden abgelegten Werten den Druck p und die Wandtemperatur $T_W$ bestimmen. In Fig. 4 sind Linien konstanter Wandtemperatur $T_W$ und Linien konstanten Gasdrucks p angegeben. Auch hier wird der Gasdruck p also aufgrund von elektrischen Grössen, die nacheinander an ein und demselben Widerstandselement 3 auftreten, ermittelt.

**Patentansprüche**

1. Verfahren zur Messung des Gasdrucks (p) in einem Gefäss mittels mindestens eines stromdurchflossenen Widerstandselements (3, 6), welches über das Gas in wärmeleitendem Kontakt mit der Wand des Gefässes steht, **dadurch gekennzeichnet, dass** bei mindestens zwei unterschiedlichen Messtemperaturen ($T_1$, $T_2$) jeweils an einem Widerstandselement (3, 6) elektrische Grössen erfasst und auf der Grundlage derselben der Gasdruck (p) bestimmt wird.

2. Verfahren nach Anspruch 1, **dadurch gekennzeichnet, dass** die Erfassung der elektrischen Grössen nacheinander an einem einzigen Widerstandselement (3) erfolgt.

3. Verfahren nach Anspruch 1, **dadurch gekennzeichnet, dass** zwei Widerstandselemente (3, 6) auf unterschiedliche Temperaturen ($T_1$, $T_2$) eingestellt und gleiche Temperaturänderungen derselben kompensiert werden.

4. Verfahren nach Anspruch 1 oder 2, **dadurch gekennzeichnet, dass** das mindestens eine Widerstandselement (3) mindestens periodisch einem bekannten Konstantstrom ($I_0$) ausgesetzt und aus dem Spannungsabfall ($U_0$) am Widerstandselement (3) dessen Widerstand und daraus die Wandtemperatur ($T_W$) bestimmt wird.

5. Verfahren nach Anspruch 1 oder 2, **dadurch gekennzeichnet, dass** das mindestens eine Widerstandselement (3) bei jeder der Messtemperaturen ($T_1$, $T_2$) Teil eines schwingungsfähigen Systems ist, dessen Frequenz ($\nu_1$, $\nu_2$) vom Gasdruck (p) und der Wandtemperatur ($T_W$) abhängt und jeweils ermittelt wird.

6. Vorrichtung zur Durchführung des Verfahrens nach Anspruch 3, mit einer von einem Operationsverstärker (10) abgeglichenen Wheatstone-Brücke (1), in deren erstem Zweig ein Widerstandselement (3) liegt, **dadurch gekennzeichnet, dass** im zweiten Zweig der Wheatstone-Brücke (1) ebenfalls ein Widerstandselement (6) liegt und dieselbe derart abgestimmt ist, dass an mindestens einem Punkt des Messbereichs die linearisierten Abhängigkeiten der an der Wheatstone-Brücke (1) zum Zweck des Abgleichs abgegriffenen Spannungen von der Messtemperatur ($T_1$; $T_2$) des Widerstandselements (3; 6) im jeweiligen Zweig gleich sind.

7. Vorrichtung nach Anspruch 6, **dadurch gekennzeichnet, dass** der zwischen einem ersten Brückenwiderstand (2) und dem ersten Widerstandselement (3) liegende Abgriff an der Wheatstone-Brücke (1) mit dem Operationsverstärker (10) über einen Spannungsteiler (7) verbunden und dem zweiten Widerstandselement (6) ein Vorwiderstand (5) unmittelbar vorgeordnet ist.

8. Vorrichtung nach Anspruch 7, **dadurch gekennzeichnet, dass** der Ausgang des Spannungsteilers (7) mit einer Konstantstromquelle (11) verbunden ist.

9. Vorrichtung zur Durchführung des Verfahrens nach Anspruch 4, mit einer von einem Operationsverstärker (10) abgleichbaren Wheatstone-Brücke (1), in deren erstem Zweig ein Widerstandselement (3) liegt, **dadurch gekennzeichnet, dass** der Ausgang des Operationsverstärkers (10) über einen Schalter (14) auf die Wheatstone-Brücke (1) zurückgeführt und dieselbe mit einer Konstantstromquelle (15) verbunden ist.

10. Vorrichtung zur Durchführung des Verfahrens nach Anspruch 5, mit einer von einem Operationsverstärker (10) abgeglichenen Wheatstone-Brücke (1), in deren erstem Zweig ein Widerstandselement (3) liegt, **dadurch gekennzeichnet, dass** der Operationsverstärker (10) über einen von einem Amplitudenregler (19) geregelten Verstärker (17) rückgekoppelt ist.

11. Vorrichtung nach Anspruch 10, **dadurch gekennzeichnet, dass** zur Aenderung ihres Teilungsverhältnisses mindestens ein Widerstandswert in einem der Zweige der Wheatstone-Brücke (1) umschaltbar ist.

**Claims**

1. Method for measuring the gas pressure (p) in a vessel by means of at least one resistance element (3, 6) through which a current flows and which is in heat-conducting contact with the wall of the vessel via the gas, **characterized in that** electrical variables are measured at at least two different measuring temperatures ($T_1$, $T_2$) in each case at a resistance element (3, 6) and the gas pressure (p) is determined on the basis of said variables.

**2.** Method according to Claim 1, **characterized in that** the measurement of the electrical variables is effected in succession at a single resistance element (3).

**3.** Method according to Claim 1, **characterized in that** two resistance elements (3, 6) are adjusted to different temperatures ($T_1$, $T_2$) and identical temperature changes thereof are compensated.

**4.** Method according to Claim 1 or 2, **characterized in that** the at least one resistance element (3) is subjected at least periodically to a known constant current ($I_0$) and its resistance is determined from the voltage drop ($U_0$) at the resistance element (3) and the wall temperature ($T_W$) is determined from said resistance.

**5.** Method according to Claim 1 or 2, **characterized in that,** at each of the measuring temperatures ($T_1$, $T_2$), the at least one resistance element (3) is part of a system which is capable of oscillation and whose frequency ($\nu_1$, $\nu_2$) is dependent on the gas pressure (p) and on the wall temperature ($T_W$) and is determined in each case.

**6.** Apparatus for carrying out the method according to Claim 3, comprising a Wheatstone bridge (1) which is balanced by an operational amplifier (10) and in whose first branch a resistance element (3) is present, **characterized in that** a resistance element (6) is likewise present in the second branch of the Wheatstone bridge (1) and the latter is adjusted so that, at at least one point of the measuring range, the linearized dependencies of the voltages tapped at the Wheatstone bridge (1) for the purpose of balancing on the measuring temperature ($T_1$; $T_2$) of the resistance element (3; 6) are identical in the respective branch.

**7.** Apparatus according to Claim 6, **characterized in that** the tap on the Wheatstone bridge (1), between a first bridge resistance (2) and the first resistance element (3) is connected to the operational amplifier (10) via a voltage divider (7), and a series resistance (5) is arranged directly upcircuit of the second resistance element (6).

**8.** Apparatus according to Claim 7, **characterized in that** the output of the voltage divider (7) is connected to a constant current source (11).

**9.** Apparatus for carrying out the method according to Claim 4, comprising a Wheatstone bridge (1) which can be balanced by an operational amplifier (10) and in whose first branch a resistance element (3) is present, **characterized in that** the output of the operational amplifier (10) is led back to the Wheatstone bridge (1) via a switch (14) and said Wheatstone bridge (1) is connected to a constant current source (15).

**10.** Apparatus for carrying out the method according to Claim 5, comprising a Wheatstone bridge (1) which is balanced by an operational amplifier (10) and in whose first branch a resistance element (3) is present, **characterized in that** the operational amplifier (10) is fed back via an amplifier (17) controlled by an amplitude controller (19).

**11.** Apparatus according to Claim 10, **characterized in that,** for changing its dividing ratio, at least one resistance value in one of the branches of the Wheatstone bridge (1) is switchable.

**Revendications**

**1.** Procédé de mesure de la pression d'un gaz (p) dans un récipient, à l'aide d'au moins un élément résistif (3, 6) traversé par un courant électrique, qui est placé, par l'intermédiaire du gaz, en contact de conductivité thermique avec la paroi du récipient, **caractérisé en ce que,** pour au moins deux températures de mesure ($T_1$, $T_2$) différentes, chaque fois sur un élément résistif (3, 6) sont appréhendées des grandeurs électriques et la pression de gaz (p) est déterminée sur la base de celles-ci.

**2.** Procédé selon la revendication 1, **caractérisé en ce que** la détection des grandeurs électriques s'effectue l'une après l'autre sur un élément résistif (3) unique.

**3.** Procédé selon la revendication 1, **caractérisé en ce que** deux éléments résistifs (3, 6) sont réglés à des températures ($T_1$, $T_2$) différentes et des variations de température identiques de ceux-ci sont compensées.

**4.** Procédé selon la revendication 1 ou 2, **caractérisé en ce qu'**au moins un élément résistif (3) est exposé, au moins périodiquement, à un courant constant ($I_0$) connu et, à partir de la chute de tension ($U_0$) au passage de l'élément résistif (3), la valeur de sa résistance et, à partir de là, la température de paroi ($T_w$) sont déterminées.

**5.** Procédé selon la revendication 1 ou 2, **caractérisé en ce que** le au moins un élément résistif (3) fait partie, pour chacune des températures de mesure ($T_1$, $T_2$), d'un système susceptible d'entrer en oscillation, dont la fréquence ($\nu_1$, $\nu_2$) dépend de la pression de gaz (p) et de la température de paroi ($T_w$) et est chaque fois déterminée.

**6.** Dispositif de mise en oeuvre du procédé selon la revendication 3, avec un pont de Wheatstone (1) équilibré par un amplificateur opérationnel (10), pont dans la première branche duquel est situé un élément résistif (3), **caractérisé en ce que,** dans la deuxième branche de pont de Wheatstone (1), est également placé un élément résistif (6) et que celle-ci est accordée de manière que, en au moins un point de la plage de mesure, les fonctions linéarisées des tensions, prélevées sur le pont de Wheatstone (1) dans le but de l'équilibrage, dont la variable est la température de mesure ($T_1$; $T_2$) de l'élément résistif (3; 6), sont identiques dans chaque branche.

**7.** Dispositif selon la revendication 6, **caractérisé en ce que** le point de prélèvement, situé entre une première résistance de pont (2) et le premier élément résistif (3), sur le pont de Wheatstone (1) est relié à l'amplificateur opérationnel (10) par un diviseur de tension (7) et une résistance série (5) est branchée directement en amont du deuxième élément résistif (6).

**8.** Dispositif selon la revendication 7, **caractérisé en ce que** la sortie du diviseur de tension (7) est reliée à une source de courant constant (11).

**9.** Dispositif de mise en oeuvre du procédé selon la revendication 4, avec un pont de Wheatstone (1) susceptible d'être équilibré par un amplificateur opérationnel (10), pont dans la branche duquel est placé un élément résistif (3), **caractérisé en ce que** la sortie de l'amplificateur opérationnel (10) est retournée, par un élément de commutation (14), au pont de Wheatstone (1) et celui-ci est relié à une source de courant constant (15).

**10.** Dispositif de mise en oeuvre du procédé selon la revendication 5, avec un pont de Wheatstone (1), équilibré par un amplificateur opérationnel (10), pont dans la première branche duquel est placé un élément résistif (3), **caractérisé en ce que** l'amplificateur opérationnel (10) est muni d'une rétroaction par l'intermédiaire d'un amplificateur (17), réglé par un régulateur d'amplitude (19).

**11.** Dispositif selon la revendication 10, **caractérisé en ce qu'**au moins une valeur de résistance est susceptible d'être commutée dans l'une des branches du pont de Wheatstone (1), dans le but de modifier son rapport de division.

FIG. 1

FIG. 2

FIG. 3

FIG. 4